# EUROPEAN PATENT APPLICATION

(11) **EP 4 527 503 A1**
(43) Date of publication of application: **26.03.2025**
(21) Application number: 23382949.8
(22) Date of filing: 19.09.2023
(51) Int. Cl.: B02C 13/22, B02C 19/18, B02C 13/14

(54) **APPARATUSES AND METHODS FOR PRODUCING PARTICLES**

(71) Applicant: Sima, Marc, 07340 Alaro (ES); Licitar, Antonijo, 10000 Zagreb (HR)
(72) Inventor: Sima, Marc, 07340 Alaro (ES); Licitar, Antonijo, 10000 Zagreb (HR)
(74) Representative: Bardehle Pagenberg S.L.

(57) **Abstract**

The present disclosure relates to apparatuses for producing (nano)particles and optionally to sinter materials, and to top-down methods for producing nanoparticles using such apparatuses. A core of such an apparatus comprises a first disc and a second disc including hypersonic blades arranged in concentric rings and channels between those rings. The first disc and the second disc are arranged such that the channels of each disc surround at least in part the hypersonic blades of the other disc.

## Description

### TECHNICAL FIELD

The present disclosure relates to apparatuses for producing particles, particularly nanoparticles, and to top-down methods for producing (nano)particles using such apparatuses. The nanoparticles may be produced from micron sized material. The apparatuses of the present disclosure may process dry material as well as liquid and gaseous materials. For example, an input powder may be processed in a fluid atmosphere. A slurry or dispersion may also be used as an input in some examples.

### BACKGROUND

Nanoparticles generally have at least one of their dimensions, optionally all their dimensions, between 1 nm and 100 nm. As the surface area to volume ratio of the material becomes significant in the nanoscale, the properties of the nanoparticles may be different from the properties of larger particles. Nanoparticles may be used in a wide range of fields, for example medicine, electronics, materials science and others.

Current methods of producing these materials often involve bottom-up processes or production methods that require the use of chemicals and high energy consumption. These processes may be time-consuming and expensive.

One known top-down approach involves a mechanical mill, disclosed in US 11154868 B2 and US 11607693 B2. In these documents, two rotors including aerodynamical blades which can be rotated in opposite directions are referred to. However, it has been discovered that these designs are actually not capable of producing more than 5% nanoparticles from the input material. Also, blade damage and abrasion actually occur. The input material collides with the blades, breaking down due to the collisions with the blades and also deteriorating the blades. The material removed from the blades may contaminate the environment and may cause the nanoparticles to comprise impurities.

The present disclosure aims at resolving, or at least reducing one or more of the above mentioned disadvantages.

### SUMMARY

In an aspect of the present disclosure, an apparatus for producing particles of a material is provided. The apparatus comprises a core for accelerating the material and colliding particles of the material to produce smaller particles, particularly nanoparticles, wherein the core comprises a first disc and a second disc facing the first disc, and one or more drives for rotating the first disc and/or the second disc. The first disc and the second disc comprise a plurality of concentric rings, wherein each ring includes a blade base and a plurality of hypersonic blades arranged on the blade base and a plurality of concentric channels alternately interleaved with the plurality of concentric rings. The hypersonic blades comprise a sharp leading edge, a sharp trailing edge and a suction surface and pressure surface configured to produce an expansion wave. And the hypersonic blades of the plurality of concentric rings of the first disc are arranged in the channels of the second disc and the hypersonic blades of the plurality of concentric rings of the second disc are arranged in the channels of the first disc.

The channels formed on the second disc surround at least in part the hypersonic blades of the hypersonic blades on the first disc and vice versa.

Therefore, in a disc of the core, rings comprising blades are alternated with rings not including blades. In addition, the rings not including the blades form channels, such that there is a difference in height, herein measured along the axial direction of the core, between the base of a channel and the base on which a blade is arranged. In this manner, the channels of one of the discs surround at least in part the blades of the other disc.

In addition, the blades are hypersonic blades. In some examples, a hypersonic blade may comprise a shape similar to a kite or a diamond in cross-section, i.e. in a plane taken perpendicular to the axial direction of the core, and therefore of each of the discs.

These two aspects, namely the difference in "height" between the channel base and the blade base which allows the channels, i.e. the second rings separating the first rings, to surround the blades of the other disc, and the shape of the blades help to prevent, or at least to reduce, the collision / impact of the input material with the blades. Rather, a portion of the input material collides with another portion of the input material, for producing material of smaller dimensions. As the first and/or the second disc rotate, the input material may be sucked into the core and between the two discs. Therefore, the input material may be dragged to an inside of the core, instead of pushed to the inside of core.

Throughout this disclosure, a sharp leading and trailing edge means that the edges are not rounded. For example, instead of an edge of a local region being rounded, the edge may comprise two adjacent edge portions which meet in a vertex and have a certain angle between them, for example an angle below 180 ° or below 90 °. The suction and pressure surfaces of the blades may have a similar sharp transition point, which is configured to produce an expansion wave.

Throughout this disclosure, a hypersonic blade may refer to a blade having the shape indicated above. At least the shape of the blades may help to accelerate the input material and cause it to reach speeds of rotation similar to the ones of the disc. Collisions of the input material with the blades may therefore be avoided or at least reduced.

The input material may particularly be a powder-based material. As explained further below, the input material may be surrounded by a surrounding material, in particular a fluid such as a gas or a liquid. In some examples, the input material may be a dispersion or slurry. For example, a dispersion comprising a liquid and salt minerals and/or biological materials dissolved in the liquid may be used.

In some examples, the first disc and/or the second disc may comprise an opening, optionally an opening close to a center of the disc or a central opening, through which the material can be sucked into the core when the first disc and/or the second disc are rotated. The material may therefore be dragged between the disc from one axial side of the core, from the other axial side of the core, or even from both axial sides of the core. In some examples, elements for suitably introducing and outputting a material into and out of the core may be provided at the entrance and at the exit of the core. For example, ejectors may be provided. Other elements for helping to transport the material may be provided.

In some examples, both discs may be rotated. In a preferred example, both discs may be rotated in opposite directions. In other examples, one of the discs may be rotated, while the other is static. Rotation of at least one disc may be performed at over 25.000 revolutions per minute (rpm) in some examples, optionally above 40.000 rpm, e.g. about 45.000 rpm or more. A sufficiently high speed of rotation may accelerate the input material to hypersonic speeds (e.g. to a speed that exceeds five times the speed of sound and even more, depending for example on the diameter of the discs).

In some examples, the leading edges of the hypersonic blades of the first disc may point in a same circumferential direction of the first disc, and the leading edges of the hypersonic blades of the second disc may point in a same circumferential direction of the second disc. The leading edges of the blades of the first disc may point in a same or a different direction of the leading edges of the blades of the second disc. The orientation of the hypersonic blades in each disc may be adjusted to the direction of rotation of the discs and to the input material used. If the discs are rotated in opposite directions, the leading edges of the blades of each disc may point in opposite directions. If the discs are rotated in a same direction, the leading edges of the blades of each disc may point in a same direction (the direction of rotation). Also, if the discs are rotated in a same direction, but at different rotational speeds, the leading edges of the blades of each disc may point in opposite directions.

Suitable drives or actuators may be provided for rotating at least one of the discs. For example, one or more motors, a gas-powered system, an electromagnetically powered system and others may be used for causing rotation. In some examples, a flywheel may be connected to the disc(s) to be rotated for reducing stress during operation.

In some examples, at least one of the discs may be rotated with a hydraulic system or a pneumatic system. In examples in which a pneumatic system is provided to rotate a disc, a gas which is introduced into the core may also be a gas which is used to drive the disc, and the core may be slightly under pressurized with respect to the pneumatic system. In this manner, leakage of a material inside the core may be avoided or at least reduced due to the pressure difference between the core and the pneumatic system. And if gas from the pneumatic system enters the core, contamination may be avoided as the gas in the pneumatic system and inside the core is the same. In some examples, two tanks of a same gas, e.g. an inert gas, may be provided. Gas from one of the tanks may be introduced into the core to provide a specific atmosphere while gas from the other tank may be used to drive the pneumatic drive. In some examples, the pneumatic system may comprise a turbine and a compressor, such that the gas from the corresponding tank may be compressed and used to move the turbine, and therefore to move the corresponding shaft and disc.

If a liquid is to be introduced in the core, the core should be liquid tight for avoiding damage to the surrounding elements of the apparatus. A non-contact coupling between a drive for rotating a shaft and the shaft may be provided. A suitable non-contact coupling may be a magnetic coupling. A magnetic coupling may for example include permanent magnets or electromagnets. A non-contact coupling may help to avoid or at least reduce the risk of having liquid or humidity leaking from the core reaching and damaging the drive. As lubricants may be dispensed with and due to less friction due to the non-contact coupling, a non-contact coupling may also help to have a smoother operation and to transfer the energy from the drive to the shaft more efficiently.

In some examples, a chord length between the leading edge and the trailing edge of the hypersonic blades of a ring of the first disc may decrease from a most radially inner ring towards a most radially outer ring of the first disc, and a chord length between the leading edge and the trailing edge of the hypersonic blades of a ring of the second disc may decrease from a most radially inner ring towards a most radially outer ring of the second disc. This can help to create a lower pressure at an outer radial portion of the discs, suck the input material to an inside of the core and to accelerate it, and to cause that an angular rotational speed of the material between the discs increases towards an outer radial direction of the core. Colliding the input material and breaking it to a desired size may be faster.

In some examples, a pitch of the hypersonic blades of a ring of the first disc may increase from a most inner ring towards a most outer ring of the first disc in a radial direction of the first disc. Similarly, a pitch of the hypersonic blades of a ring of the second disc may increase from a most inner ring towards a most outer ring of the second disc in a radial direction of the second disc. This can also help to drag the input material between the discs and crush it to smaller portions in an efficient manner.

In some examples, the first disc and the second disc may comprise a ceramic material. In particular, the first disc and the second disc may be made of a ceramic material. A ceramic coating may be provided in other examples. Colliding input materials which may show magnetic effects during the use of the core, e.g. materials including metals such as iron, may be particularly difficult to handle if the first and second discs for example comprise, or are made of, metallic materials. Using ceramic materials for the discs can help to collide and suitably deal with such kind of input materials.

The apparatus may comprise one core or a plurality of cores. The core may therefore be referred to as a single stage core (one core) or a multistage core (plurality of cores). If the core is a multistage core, there may be a plurality of pairs of discs, each pair comprising a first disc and a second disc as described herein. In some examples, all the first discs are driven using a single actuator/drive such as a motor, and all the second discs are driven by another actuator, e.g. another motor. As explained further below, when the apparatus comprises more than one core, an input material may be circulated through each of the cores in sequence for achieving a desired particle size and distribution. The apparatus may be configured such that the collided material may be directly collected from each of the cores in some examples. It may also be possible to selectively direct and collide input material into specific cores, without having to circulate the input material through all of the cores available.

In some examples, the core may further comprise a housing enclosing the first disc and the second disc. One or more elements for acting on the atmosphere between the first and second disc and/or on the material when it is introduced between the first and second discs, during the colliding process, or when it is outputted from between the first and second discs may be provided. One or more of the elements may be tools in some examples.

For example, a plurality of lasers may be provided in the housing, optionally in a circular arrangement, such that a plurality of laser beams may be applied on the collided material to be removed from between the discs. The collided material may have a softened crystal lattice after the collision process, and the properties of the collided material may be influenced with the laser beams. The lasers may be used to reduce the collided material, i.e. to cause the collided material to lose oxygen. A selective influence/action of the collided material when it is still soft and has not yet reached a hardened crystal structure may be performed in other manners too.

In these or other examples, the housing may comprise one or more plasma torches. The plasma torches may be used for sintering the material introduced between the first disc and the second disc. Still in these or other examples, the housing may comprise one or more magnetrons. A magnetron may be used to generate microwaves, which may be used to reduce the humidity level between the first and second discs. Other suitable tools may alternatively or additionally be provided in the housing of the core.

Regarding sintering, the housing may comprise one or more elements suitable for helping with and/or for enhancing the sintering of the material. I.e., at least some of the one or more elements may be configured to adjust a sintering process within the core. For example, the housing may comprise one or more elements, e.g. conduits or tubes, for introducing one or more fluids, e.g. gases, which may help to sinter a material. In some examples, one or more of these elements may be provided near an inlet for introducing the input material in the core. In these or other examples, one or more elements may be provided near an outlet for removing the collided material from the core. The sintered material may have a highly dense and stable structure. The housing of the collider may also comprise one or more elements for adjusting the sintering conditions. For example, temperature and pressure within the core may be adjusted with suitable elements or tools. Also, the housing of the core may comprise one or more elements for introducing electron dislocations during the collision process, which may enhance sintering and densification of the sintered material. Elements for helping with and/or for enhancing the sintering of the material may also be provided in the apparatus after an outlet of the core, e.g. in an ejector arranged after the core.

Nanosized materials as well as materials of a bigger size, e.g. micron-sized materials, may be used as input in a sintering process. Slurries, dispersions and gas mixtures including solid material may also be used as inputs for the core in the sintering process. The sintered material may be a nanosized material, but may also have bigger dimensions. The sintered material may include two or more different materials, e.g. two or more nano-sized or micron-sized materials.

Besides being configured for sintering, the apparatus may be configured for synthesizing a material. For example, two or more different materials may be introduced in the core of the apparatus, collided and then bonded together due to some chemicals or gases that are also introduced into the core.

The material to be collided may therefore be introduced and guided to the core. Also, the collided material may be extracted from the core and guided away from it, e.g. through the apparatus. When the nanoparticles of the collided material have a desired size (or when the sintered/synthesized material has a desired size and/or properties), they may be removed from the apparatus. In some examples, they may be collected in a collection system or "collector system", and then removed from the apparatus. The collection system may in some examples include one or more glove boxes, i.e. hermetically sealed enclosures for ensuring stability, providing a controlled environment for the nanoparticles and avoiding contamination. In other examples, the collided material of a desired size may be directly removed from the core. A collection system, which may comprise one or more ejectors, may be connected to the outlet of the core. If the apparatus comprises a plurality of cores, a plurality of collections systems may be provided, e.g. the collection systems may be connected to the outlets of the cores, such that collided material may be removed from each core and packaged, e.g. palletized, directly.

The apparatus may be configured to pass the material through the core more than once. If after a colliding process in the core, there is material which does not have the desired dimensions, e.g. on the nanoscale, this material which does not yet have the desired size may be caused to go through the core again. This process may be repeated a plurality of times.

In some examples, the apparatus may further comprise a system for generating an underpressure or "vacuum" for removing collided material from the core. This can be a suitable and efficient manner for removing the material from the core. A vacuum may herein be regarded as a significantly lower pressure than the working pressure in the core.

Vacuum may also be generated for preparing an atmosphere inside the apparatus before introducing the input material to be collided. For example, an inside of the apparatus may be washed and then vacuum may be applied for achieving a suitable atmosphere in the apparatus before introducing a material to be collided, see also below. Besides generating vacuum, or alternatively, one or more gases, e.g. inert gases, may be introduced into the apparatus for preparing the atmosphere. The level of oxygen inside the apparatus may also be controlled.

The apparatus may comprise a system for separating the collided material from a surrounding medium in some examples. In some of these examples, this system and the system for generating an underpressure for removing the collided material from the core may be the same. Such a system may for example be a cyclonic separator. Other systems such as a centrifugal separator, a system including gravity separation or a system including electro potential separation (using e.g. static electricity) may also be used.

The apparatus may further comprise a system for controlling an atmosphere within a path of the apparatus through which the material is to travel. For example, the system may be configured to introduce a fluid, optionally a gas, in the apparatus for modifying an atmosphere within the apparatus. Introducing nitrogen may help to regulate a level of oxygen within the apparatus. Argon is another fluid which may help to create a desired and controlled environment in some examples. The system may additionally or alternatively be configured to create vacuum within the apparatus. For example, a vacuum pump may be provided. A controlled suitable atmosphere for the production of nanoparticles may be achieved. The apparatus may further comprise a drying system and/or a dehumidifying system.

The apparatus may further comprise a controller. The controller may be configured to control, e.g. manage and coordinate, the operation of the apparatus. The controller may have one or more processors and one or more memories with instructions which may be executed by the one or more processors. The apparatus may further comprise a plurality of sensors which may be communicatively coupled (through wires or wireless) to the controller at least in some examples. Examples of sensors may be temperature sensors, humidity sensors, pressure sensors and others. The measurements of the sensors may help to precisely control and adjust the operation of the apparatus in real time.

The apparatus may further comprise a plurality of valves which may be opened and closed for suitably operating the apparatus. Valves may help to control a flow through a fluid path within the apparatus. They may also help to regulate pressure.

The apparatus may be configured to generate hydrogen (H₂) inside it. Collisioning oxidizing metallic material may activate the material such that the produced nanoparticles are able to react with water molecules, in particular without adding a base such as potassium or sodium hydroxide (KOH and NaOH). Alkaline water, i.e. water in which there is an excess of hydroxide ions (OH⁻) over hydrogen ions (H⁺), may also (but does not need to be) be used. A metallic material herein may include both metals (iron (Fe)), aluminum (Al), calcium (Ca), magnesium (Mg), ...) and metalloids (e.g. silicon (Si)). The oxidizing metallic material may further comprise a non-metallic element or compound. Additives may be added for improving the reaction between the oxidizing metallic material and the water. For example, if the oxidizing metallic material comprises silicon, graphene or activated carbon may help to improve the reaction between the material and the water. Such additives may also be included in the oxidizing metallic material. For example, the oxidizing metallic material may include nano-sized activated carbon or graphene. An oxidizing material may herein refer to a material which is capable of removing and capturing oxygen from a water molecule, such that hydrogen is produced in the process. Other additives that may be used are for example iron nanoparticles or nickel (Ni).

The use of nickel may help to weaken the bonds between the hydrogen and the oxygen of the water molecules by bonding to the hydrogen atoms of the water molecules. Nickel may therefore help to promote the reaction between the oxidizing material and the water molecules. Also, nickel may help to break the water molecules, the hydrogen atoms remaining attached to the nickel. Accordingly, the hydrogen production may also be enhanced.

Nickel may be introduced in the core, e.g. in powder form, in some examples. In other examples, nickel may be attached to an inside of the apparatus. For example, strips or other suitable elements comprising nickel, e.g. made of nickel or being coated with nickel, may be attached to the apparatus. A suitable location may be at the outlet of the core, such that a water dispersion with collided oxidizing material may be passed and contacted with the nickel.

The oxidizing material may be provided and introduced into the core in several ways: for example, it may be input to the apparatus in powder form and water may be added such that a dispersion/slurry including the powder is introduced in the core of the apparatus, or a dispersion/slurry of the particles in the water may be input to the apparatus, or a powder may be introduced into the core, and then the water may be added to the nanoparticles after the collision process.

Therefore, an oxidizing material may be collided for obtaining nanoparticles which may react with water, for example seawater, without the need to use further chemical elements/compounds. Such a reaction may effectively produce hydrogen. For example, if silicon is used, the nanoparticles of silicon produced may undergo the following reaction: *Si* + 4*H*₂0 → *Si*(*OH*)₄ + 2*H*₂. Hydrogen gas is therefore released. The silanol functional groups (Si-OH) of the orthosilicic acid (Si(OH)₄) may then form siloxane bonds (Si-O-Si) and release water: 2*Si*(*OH*)₄ → (*OH*)₃*Si* - O - *Si*(*OH*)₃ + *H*₂*O.* Subsequently, the released water molecules may react with the silicon nanoparticles which have not reacted yet, sustaining the production of hydrogen gas until the silicon nanoparticles have been consumed: 4*H*₂*O* + *Si* → *Si*(*OH*)₄ + 2*H*₂*.*

The chemical reactions above may cause the pH to decrease and a decrease in pH can increase the dynamics of the reaction. For example, decreasing a pH below 5 may help to speed up the process as well as to increase the reactivity of the Si nanoparticles. However, this will depend on which additive(s) and in which amount are added (if added at all). It may also be possible that the pH increases in some examples. In some examples, an acidic solution, e.g. comprising orthosilicic acid (Si(OH)₄), may be added to accelerate the process for generating hydrogen gas.

In some examples, hydrogen may be produced in a cyclonic separator (or for example in a centrifugal separator if such a component is used instead). The hydrogen may be collected from the top of the cyclonic separator and a remaining liquid may be collected from the bottom of the cyclonic separator. Hydrogen may also be produced in, and collected from, the core in some examples.

Although not necessary, a hydroxide compound such as KOH or NaOH may be used to trigger or initiate hydrogen production. This may accelerate the (initiation of the) process, as the reaction between water and the oxidizing metallic nanoparticles will start quicker. As KOH or NaOH may only be used to cause the reaction to initiate, and not to keep the reaction ongoing, a small amount of KOH or NaOH may be sufficient.

It should also be noted that nanoparticles suitable for producing hydrogen with the apparatus described herein may also be used outside the apparatus. For example, the nanoparticles may be mixed with water, e.g. seawater, for producing hydrogen in a suitable container outside the apparatus. For example, a reactor may be used for producing the hydrogen. The reactor may be operatively connected to the apparatus in some examples.

A core as described herein and an apparatus as described herein may be used to produce particles, optionally nanoparticles, as well as to sinter material. In particular, smaller particles obtained in the core after colliding material with itself may be sintered. The produced material may be a dispersion in some of the examples. For example, the produced particles may be dispersed in a water dispersion. In a further aspect of the invention, a method is provided. The method comprises rotating the first disc and/or the second disc of a core as described throughout this disclosure, due to the rotation, sucking a material into the core, accelerating it and colliding it with itself between a first ring of hypersonic blades of the first disc and a first ring of hypersonic blades of the second disc adjacent in a radial direction of the core, such that (nano)particles of the material are produced.

The method may further comprise modifying an atmosphere within the core, e.g. during the rotation of at least one of the discs. For example, one or more fluids may be introduced into the core.

The method may further comprise sintering a material from the collided particles. Sintering may take place in the core of the apparatus.

The method may further comprise producing hydrogen (gas) from the produced nanoparticles, for example in the core of the apparatus or in the cyclonic separator (or centrifugal separator) of the apparatus. Nanoparticles from an oxidizing metallic material may react with surrounding water for producing hydrogen.

Particular aspects, examples and elements of aspects or examples disclosed herein can be combined together in any number and order to form new aspects and examples that form part of this disclosure.

### BRIEF DESCRIPTION OF THE DRAWINGS

Figure 1 schematically illustrates a side and exploded view of an example of a core for accelerating and colliding material with itself for producing particles, optionally nanoparticles.
Figure 2 schematically illustrates a bottom view of the first disc including the hypersonic blades of figure 1.
Figure 3 schematically illustrates a cross-section of an example of the first disc and the second disc.
Figure 4 schematically illustrates a top view of the first element which supports the first disc including the hypersonic blades of figure 1.
Figure 5 schematically illustrates an example of a geometry and arrangement of the hypersonic blades in a disc which includes the blades.
Figure 6A schematically illustrates a perspective view of an apparatus comprising a core according to the disclosure.
Figure 6B schematically illustrates a front view of the apparatus of figure 6A.
Figure 7 schematically illustrates another example of an apparatus, the apparatus comprising a plurality of cores.

### DETAILED DESCRIPTION OF EXAMPLES

Reference will now be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

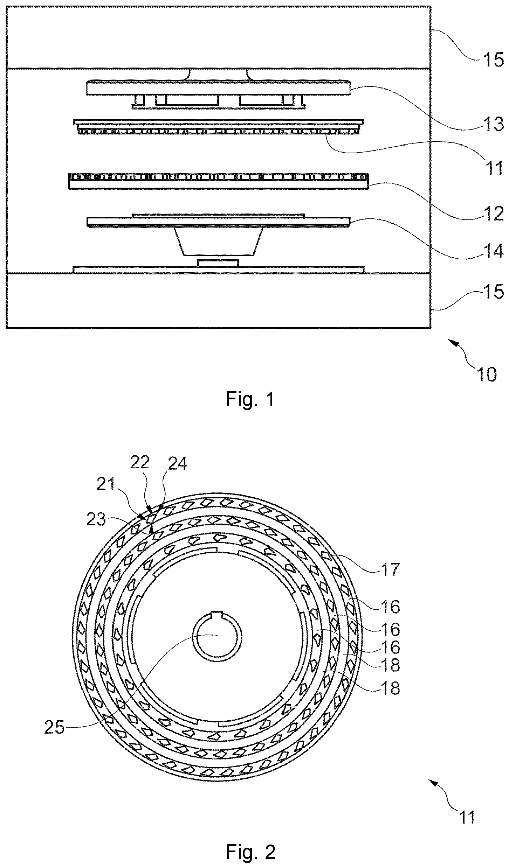

Figure 1 schematically illustrates a side and an exploded view of an example of a core 10 for accelerating and colliding material with itself for producing particles, optionally nanoparticles. Such a core may be used in an apparatus for producing particles of a smaller size and/or for sintering a material.

The core 10 comprises a first disc 11 comprising hypersonic blades and a second opposite disc 12 comprising hypersonic blades. In this example, the core 10 further comprises a first supporting element 13 for supporting the first disc 11 and a second supporting element 14 for supporting the second disc 12.

The core 10 further comprises a housing 15 enclosing at least the first disc 11 and the second disc 12. The housing 15 may form a chamber in which the first disc 11 and the second disc 12 are arranged. The first and second supporting elements 13, 14 may be configured to connect with a corresponding portion of the housing 15. Although in the example of this figure a disc is provided as a separate piece from a corresponding supporting element, in other examples they may be integrally formed, or any suitable support for the first disc 11 and second disc 12, as well as any suitable coupling between them and e.g. a shaft and/or the housing 15 may be provided.

In some examples, a disc 11, 12 comprising hypersonic blades and a supporting element 13, 14 may form a rotor. In some examples, a disc 11, 12 comprising hypersonic blades and a supporting element 13, 14 may form a stator. At least one the discs 11, 12 comprising blades may be rotatable. Both discs may be rotatable, or one of the discs may be rotatable. If both discs are rotatable, they may be rotated in a same direction or in opposite directions. The orientation of the hypersonic blades and the direction of rotation of the discs may be adjusted for suitably sucking and accelerating the material inside the core 110 and between the discs 11, 12 comprising the hypersonic blades. In the specific disclosed example, both discs are rotated in opposite directions.

The pairs of discs 11, 12 comprising hypersonic blades and the supporting elements 13, 14 may be directly or indirectly connected to a corresponding shaft. In some examples, connection of the discs to corresponding shaft may be through a hydraulic coupling system or a magnetic coupling system. Bearings such as ceramic bearings may be provided. A drive may be provided for rotating the shaft, and therefore rotating the corresponding disc and the hypersonic blades thereof. In some examples, one or more electric motors may be provided. The motors may be AC motors, brushless DC electric motors, or in general any suitable motors for rotating the shaft. Other suitable actuators for rotating the shaft at high speed may alternatively be provided. The one or more drives and may be arranged outside the core 10 and the coupling may be magnetic in preferred examples so as to avoid any contamination.

In the example of figure 1, the first disc 11 and the second 12 disc are arranged in a vertical configuration (rotation about a vertical axis). In other examples, the first 11 and second 12 discs may be arranged in a horizontal configuration (rotation about a horizontal axis), or in a different configuration.

Figure 2 schematically illustrates a bottom view of the first disc 11 including the hypersonic blades of figure 1. The first disc 11, and also the second disc 12, comprise a first plurality of concentric rings 16. Each ring 16 includes a blade base and a plurality of hypersonic blades 17 arranged on the blade base configured to suck material to be accelerated and collided with itself. The first disc 11, and also the second disc 12, further comprise a second plurality of concentric channels 18 alternately interleaved with the first plurality of concentric rings 16. A central opening 25 through which material can be sucked into the core 10 when the first disc 11 and/or the second 12 disc are rotated can also be seen in this figure.

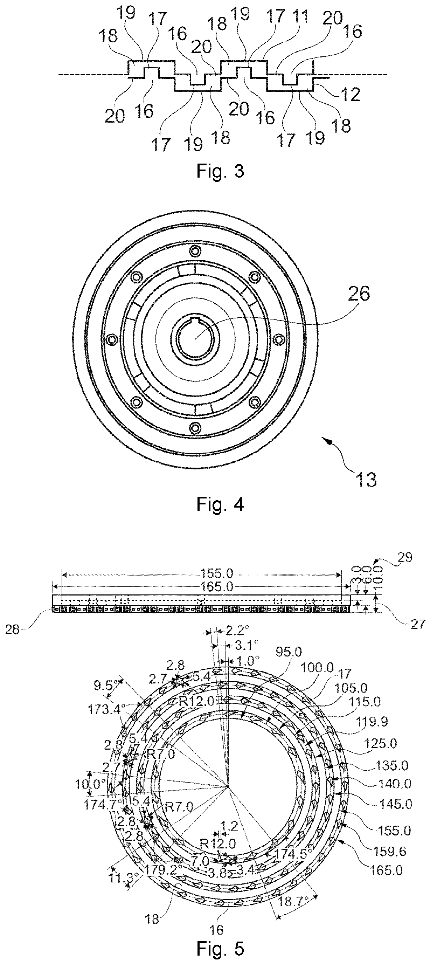

Figure 3 schematically illustrates a cross-section of an example of the first disc 11 and the second disc 12 facing each other. The cross-section is taken in a plane which includes the axial and radial directions of the core 11. As can be seen in this figure, the channels 18 alternate with the blade rings 16 in each disc. Also, the channels 18 of a disc surround at least in part the hypersonic blades 17 of the other disc. Each channel 18 includes a channel base 19, and the channel bases 19 are offset from the blade bases 20 along an axial direction of the core 10. A side wall of a blade ring 16 and a side wall of a channel ring 18 may be shared, i.e. a single wall may form the side wall of blade ring 16 and of blade ring 18. A channel 18 may have a U-shape or hat-shape in some examples.

As can also be seen in this figure, the hypersonic blades 17 of the first plurality of concentric rings 18 of the first disc 11 are arranged in the channels 18 formed by the second plurality of concentric rings of the second disc 12 such that the channels 18 formed by the second plurality of concentric rings surround at least in part the hypersonic blades 17 of the first plurality of concentric rings 16. Similarly, the hypersonic blades 17 of the first plurality of concentric rings 16 of the second disc 12 are arranged in the channels 18 formed by the second plurality of concentric rings of the first disc 11 such that the channels 18 formed by the second plurality of concentric rings surrounds at least in part the hypersonic blades 17 of the first plurality of concentric rings 16.

The hypersonic blades 17 may be integrally formed with the portion of the disc supporting them, or they may be formed separately, and then attached to the corresponding portion of the disc.

A gap (in an axial direction) between the two discs 11, 12 may be set as appropriate. In some examples, such a gap may for example be between 1 micron and 2 mm, for example between 200 microns and 2 mm. In some examples, a gap of 500 microns may be used.

Back to the example of figure 2, the hypersonic blades 17 comprise a sharp leading edge 21, a suction surface 22, and a pressure surface 23 with a sharp transition point and a sharp trailing edge 24. This shape helps to suck the input material between the first 11 and second discs 12 when at least one of the discs is rotated. A shape and size of the blades 17 in a blade ring 16 may be the same, but the shape and/or the size of the blades 17 may vary between blade rings 16 in some examples. The shape, pitch, chord length etc. of the blades may be optimized in each ring for the local conditions i.e. with increasing distance to the center, the speed of movement of the blades will increase.

The leading edges 23 of the hypersonic blades 17 of the first disc 11 may point in a same circumferential direction of the first disc 11. The leading edges 23 of the hypersonic blades 17 of the second disc 12 may point in the opposite circumferential direction: in this example, the discs with blades are rotated in opposite directions.

Also, a chord length of the blade (i.e. length between the leading edge 23 and the trailing edge 24) of the hypersonic blades 17 of a ring 18 of the first disc 11 may decrease from a most radially inner ring towards a most radially outer ring of the first disc 11. Similarly, a length between the leading edge 23 and the trailing edge 24vof the hypersonic blades 17 of a ring 16 of the second disc 12 may decrease from a most radially inner ring towards a most radially outer ring of the second disc 12.

A pitch, i.e. a distance along the circumferential direction between leading edges of two consecutive blades, may increase from a most inner ring towards a most outer ring of the first disc 11 in a radial direction of the first disc 11. The same may apply to the blades of the second disc.

In some examples, the first disc 11 and the second disc 12 may comprise, e.g. may be made of, a ceramic material. This includes the blades 17, which may comprise, e.g. be made of, a ceramic material.

Figure 4 schematically illustrates a top view of the first element 13 which supports the first disc 11 including the hypersonic blades 17 of figure 1. As can be seen in this figure, a central opening 26 is provided in this example for allowing the passage of the input material towards an inside of the core 10.

Figure 5 schematically illustrates an example of a particular geometry and arrangement of the hypersonic blades 17 in a disc which includes the blades. In this example, several angles and sizes with respect to the blades 17 may be seen. A total height 27 of a ring 16 including the blades 17, herein referring to a dimension along the axial direction of the disc, may be about 10 mm. A height 28 of the blades may be 4 mm, a height 29 of a ring 16 including the blades 17, but in a region between two blades, may be about 6 mm, and a height 30 of a ring 18 forming a channel may be 3 mm. Therefore, an axial distance between a channel base 19 and a blade base 20, i.e. a channel depth, may be about 3 mm. A diameter of the disc may be about 165 mm.

Rotation of the first and second discs may be performed over 25.000 revolutions per minute (rpm) in some examples, optionally above 40.000 rpm, e.g. about 45.000 rpm or more. A sufficiently high speed of rotation may accelerate the input material to hypersonic speeds (e.g. to a speed that exceeds five times the speed of sound).

In other examples, different parameters may be used. The parameters, e.g. the size and orientation of the blades 17, may be varied depending on the material to be processed.

In some examples, the housing 15 of the core 10 enclosing the first disc 11 and the second disc 12 may comprise one or more elements for acting on the atmosphere between the first and second discs and/or on the material when the material is introduced between the first and second discs, during the colliding process, or when the material is outputted from between the first and second discs are included in the housing 15. For example, one or more of the following may be provided in the housing 15: a plasma torch, a magnetron, and a laser. A circular arrangement of lasers may be provided in the housing such that the lasers point to a small region through which the collided material is outputted.

A cooling system may be provided for cooling the core 10. For example, the core 10 may be air-cooled, or the housing may include conduits through which a cooling fluid may be circulated.

A system for exfoliating graphene may also be provided in the core 10, e.g. in its housing 15. The system may be configured to provide a high frequency and voltage to this end.

At least some of the one or more elements may be configured to adjust a sintering process within the core 10. These elements may for example allow to control one or more of a pressure, a temperature and a composition of the atmosphere inside the core 10. For example, at least some of the elements may be configured to allow to introduce a desired fluid such as a desired gas in the core 10.

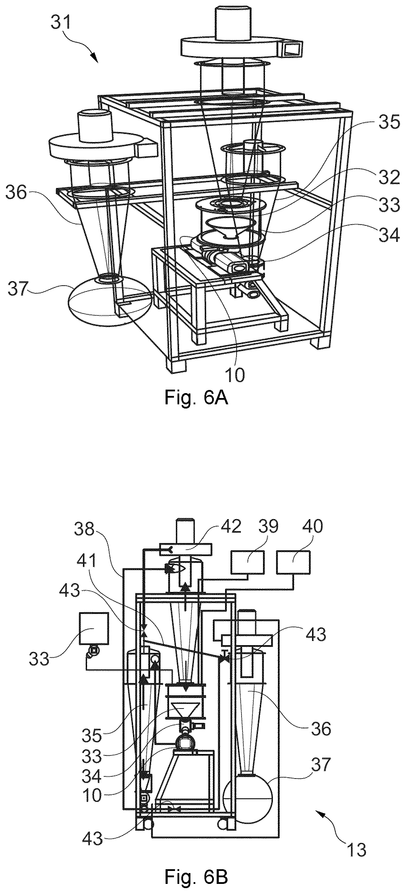

The core 10 may be incorporated in an apparatus. According to a further aspect, an apparatus for obtaining particles from a material is provided. An example of an apparatus is provided in figures 6A and 6B. Figure 6A schematically illustrates a perspective view of an apparatus comprising a core according to the disclosure. Figure 6B schematically illustrates a front view of the apparatus of figure 6A.

The apparatus 31 comprises a core 10 as described throughout this disclosure, an inlet 32 for introducing the material in the apparatus, and in particular in a path of the apparatus through which the material may travel, see figure 6A. The apparatus 31 further comprises one or more elements connecting the inlet 32 and the core 10. As can be seen in figure 6B, a material source 32 may provide material to be introduced in the apparatus such that the material can reach the core 10.

The apparatus 31 may comprise a hopper 33. The hopper may hold the material introduced in it which is to be collided and may then dispense it. The apparatus 31 may be configured to dose the material to be introduced in the core 10. For example, the apparatus 31 may comprise a system 34 for dosing the material to be collided. Any suitable dosing system may be used. For example, a roto valve may be used.

The apparatus may comprise a system 39, 40 for setting an atmosphere within a path of the apparatus through which the material is to travel. For example, the system may be configured to introduce a fluid in the apparatus for modifying an atmosphere within the apparatus. A fluid such as nitrogen (gas) may help to maintain a controlled level of oxygen during the production of the (nano)particles. A fluid such as argon (gas) may help to create a controlled environment for certain processing conditions. Other suitable fluids may be used. For example, the system 30, 40 may be configured to provide liquid nitrogen, which may help to achieve low temperatures. In some examples, the system 39, 40 may comprise a vacuum pump for creating vacuum conditions.

In the example of figure 6B, an element 40 for delivering a fluid and a vacuum pump 39 have been represented. In this example, the element 40 for delivering a fluid and a vacuum pump 39 are fluidly connected to the hopper 33. But in other examples, conditioning of the atmosphere may be provided in a different place. Conditioning of the atmosphere may be provided before the material is sucked into the core 10 for the first time at least in some examples. In some examples, vacuum may be performed, and then a fluid such as nitrogen may be introduced. The material may be introduced in the apparatus, e.g. in the hopper 33, once a desired atmosphere has been created.

The material to be collided may therefore be surrounded by a surrounding medium at least in some examples. Such a medium may comprise air, but also other fluids such as the ones introduced with the system 30, 40 for setting the atmosphere. As will be explained further below, the collided material may be separated from the surrounding medium after leaving the core 10. As mentioned with respect to the core 10, the surrounding medium may also be modified within the core 10 if for example a gas or another fluid is introduced into the core 10. In the core 10, both the input material and the surrounding medium may be accelerated.

The apparatus 31 may also comprise one or more actuators for rotating at least one of the first disc 11 and the second disc 12. An actuator may for example be a motor.

The apparatus 31 may comprise a system for generating an under pressure for removing collided material from the core 10. In particular, the system may be configured to create an underpressure in an outlet of the core 10. Besides helping to remove the collided material from the core 10, such an under pressure may also help to reduce friction with the core 10 and reduce collisions between the material and the hypersonic blades 17.

The apparatus 31 may comprise a system 35 for separating the collided material from a surrounding medium. An example of such a system may be a cyclonic separator. A cyclonic separator may remove the collided material from a fluid such as a gas or a liquid. This may be achieved through gravity and rotational effects. System 35, e.g. a cyclonic separator, may be configured to separate material by size or density in some examples. The collided material may have different sizes, and the system 35 may separate the collided material in two or more groups according e.g. to size of the components of the material. In some examples, the system 35 for separating the collided material from a surrounding medium and the system for generating an under pressure for removing the collided material from the core 10 may be the same.

The collided material may comprise a portion of nanoparticles (or more generally, of particles or material) which have a desired size and are therefore ready to be collected, and may comprise a portion of nanoparticles or material of a bigger size which has not yet reached the desired size. In some examples, the nanoparticles which are ready may be directly removed from the apparatus 31. In other examples, the apparatus 31 may comprise a system 36 configured to collect the nanoparticles which have reached a desired size. Such a system 36 may comprise an element configured to suck the nanoparticles towards an inside of the system 36. The nanoparticles may for example go from the cyclonic separator to the collection system 46, see arrow 41 in figure 6B. The system 36 may comprise a storage element 37, from which the nanoparticles may be removed. In some examples, the storage element 37 may be removable from the collecting system 36.

The portion of the collided material which has not reached a desired sized may be directed to the core 10 to be collided again, see arrow 38 in figure 6B. The apparatus 31 may be configured to this end. For example, a turbo blower 42 may help to remove the corresponding collided material and guide it towards the core 10. The medium surrounding the collided material may also be directed to the core 10 after it has been separated from the collided material. One or more turbo blowers may be connected to the system 35 for separating the collided material from a surrounding medium in some examples.

In some examples, the produced nanoparticles (or e.g. sintered material) may be processed further after they have been produced. In other examples, they may be directly packed after their production. The apparatus 31 may comprise a suitable system for packing the produced material, e.g. the produced nanoparticles, in a suitable manner. For example, the apparatus 31 may comprise a container-based system, including for example glow boxes, for packing the produced material. In some examples, the apparatus may be arranged in a clean room. The clean room may comprise one or more systems for controlling the quality of the air, for example for filtering the air. Blankets such as water blankets may be provided for air filtration.

A plurality of valves 43 can also be seen in figure 6B. The valves may regulate the passage of a fluid through a path of the apparatus.

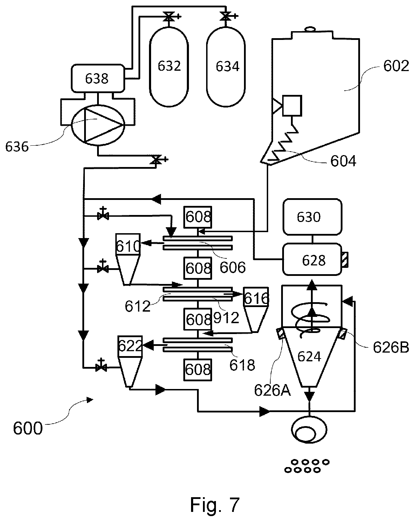

An apparatus may comprise more than one core. Figure 7 schematically illustrates an example of an apparatus 600 which comprises a plurality of cores, in particular three cores. Therefore, three stages may be provided: at the first stage, the input material is introduced into a first core 606. Once collided, it is introduced into a first cyclonic separator 610. At the second stage, the collided material from the first stage which has been separated from the surrounding medium is introduced into a second core 912. The collided material is then passed through a second cyclonic separator 616. And at the third stage, this material is introduced into a third core 618. The collided material in the third core 618 is separated from a surrounding medium once more in a third cyclonic separator 622. In the example of figure 7, a plurality of actuators 608 such as electric motors are used for rotating the first and second discs of each core 606, 912, 618.

The apparatus 600 may include or may be connected with a storage container 602 that stores an input material, e.g. a powdered material. The input material may be delivered through a screw dozing system 604 into the first core 606 along with a surrounding medium, e.g. a gas.

The apparatus 600 may further comprise a fourth cyclonic separator 624 and a plurality of ultrasound generators 626A, 626B provided with the fourth cyclonic separator 520. When the particles outputted from the third cyclonic separator 622 travel through the fourth cyclonic separator 624, the ultrasound generated by the ultrasound generators 626A, 626B help to palletize the produced particles. A pallet may have dimensions of a few microns, e.g. a length of a pallet may be below 20 microns in some examples. A plurality of pallets may be stored in a cartridge.

The apparatus 600 may further comprise a turbo blower 628 for creating an under pressure on the fourth cyclonic separator 624 and drawing the particles from the separator 624, such that they may be directed towards the first core 606 if an obtained particle size is bigger than a desired particle size. An actuator 630 such as an electric motor may be provided of operating the turbo blower 628.

The apparatus 600 may further comprise a nitrogen generator 632 for maintaining a low-oxygen atmosphere during particle production. The nitrogen generator 632 may ensure a consistent and controlled level of oxygen during the production of the particles. The apparatus 600 may further include an inert gas tank 634 for providing an inert atmosphere. The nitrogen generator 632 and the inert gas tank 634 may be connected to a vacuum pump 636 through a valve station 638. The vacuum pump 636 may be provided to deprive the entire system of air. In some examples, vacuum may first be created and then a path for the particles may be filled with e.g. nitrogen.

The apparatus 600 may further comprise a plurality of sensors, for example flow sensors, temperature sensors, humidity sensors, pressure sensors and rotational speed sensors. The operation of the sensors may be controlled using a sensor control system. A control unit may control the operation of the apparatus 600 during the production of particles based on real-time data obtained by the sensors.

Aspects of the apparatus of figure 7 may be applied and combined with the apparatus of figures 6A and 6B, and *vice versa.* For example, one or more ultrasound generators may be included in the apparatus of figures 6A and 6B for palletizing the produced particles.

A core as described herein and an apparatus as described herein may be used to produce particles of a smaller size, e.g. nanoparticles, as well as to sinter a material from the particles of smaller size obtained through collisions. In another aspect, a method is provided. The explanations and details provided with respect to the core and the apparatus can be applied to the method. The method comprises rotating the first disc and/or the second disc of a core as described throughout this disclosure, due to the rotation, sucking a material into the core, accelerating it and colliding it with itself between a first ring of hypersonic blades of the first disc and a first ring of hypersonic blades of the second disc adjacent in a radial direction of the core, such that particles, optionally nanoparticles, of the material are produced.

As the material inside the core 10 reaches hypersonic speeds, centrifugal forces may shift the trajectory of the material and may lead to an increased frequency of collision. Also, collisions release energy, e.g. an amount of energy which previously kept the material together. As the separated material is generally denser than the surrounding medium, it may be difficult for this energy to disperse in the surrounding material. Therefore, this energy may affect the collided material, for example leading to stress-related cracking and polarization of the surface of the collided material.

The Coanda effect may be generated during the use of core 10 and apparatus 31. This effect may increase the charge on the surface of the hypersonic blades 17 and may help to repel material away from the blades, helping to reduce blade damage.

The method may further comprise modifying an atmosphere within the core, e.g. during the rotation of at least one of the discs.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques within the scope of this disclosure. If reference signs related to drawings are placed in parentheses in a claim, they are solely for attempting to increase the intelligibility of the claim, and shall not be construed as limiting the scope of the claim.

## Claims

1. An apparatus for producing particles, optionally nanoparticles, of a material comprising:
a core for accelerating the material and colliding particles of the material to produce smaller particles, wherein the core comprises a first disc and a second disc facing the first disc, and one or more drives for rotating the first disc and/or the second disc, and the first disc and second disc comprising:
a plurality of concentric rings, wherein each ring includes a blade base and a plurality of hypersonic blades arranged on the blade base;
a plurality of concentric channels alternately interleaved with the plurality of concentric rings;
wherein the hypersonic blades comprise a sharp leading edge, a sharp trailing edge and a suction surface and pressure surface configured to produce an expansion wave;
wherein the hypersonic blades of the plurality of concentric rings of the first disc are arranged in the channels of the second disc; and
wherein the hypersonic blades of the plurality of concentric rings of the second disc are arranged in the channels of the first disc.

2. The apparatus of claim 1, wherein the drives are configured to rotate the first disc in a first direction and the second disc in a second direction, opposite to the first direction.

3. The apparatus of claim 1 or 2, further comprising an inlet for introducing the material in the apparatus and a material guide for guiding the material to the core.

4. The apparatus of any of claims 1 - 3, wherein the first disc and/or the second disc comprise an opening through which material can be sucked into the core when the first disc and/or the second disc are rotated.

5. The apparatus of any of claims 1 - 4, further comprising a system for setting an atmosphere within a path of the apparatus through which the material is to travel.

6. The apparatus of any of claims 1 - 5, further comprising a system for generating a vacuum for removing collided material from the core.

7. The apparatus of any of claims 1 - 6, further comprising a separator system for separating a collided material from a surrounding medium.

8. The apparatus of any of claims 1-7, further comprising a collector system configured to collect the produced particles.

9. The apparatus of any of claims 1-8, wherein a chord length of the hypersonic blades of a ring of the first and/or the second disc decreases from a most radially inner ring towards a most radially outer ring of the respective disc.

10. The apparatus of any of claims 1-9, wherein a pitch of the hypersonic blades of a ring of the first and/or the second disc increases from a radially most inner ring towards a radially most outer ring of the respective disc.

11. The apparatus of any of claims 1 - 10, wherein the first disc and the second disc comprise, and optionally are made of, a ceramic material.

12. The apparatus of any of claims 1 - 11, wherein the core further comprises a housing enclosing the first disc and the second disc, wherein the housing further comprises one or more elements for acting on the atmosphere between the first and second discs and/or on the material when the material is introduced between the first and second discs, during the colliding process, or when the material is outputted from between the first and second discs.

13. The apparatus of claim 12, wherein at least some of the elements are configured to adjust a sintering process within the core.

14. A method comprising:
rotating the first disc and/or the second disc of the core of any of claims 1-13 and, due to the rotation, sucking a material into the core, accelerating the material and colliding it with itself between a first ring of hypersonic blades of the first disc and a first ring of hypersonic blades of the second disc adjacent in a radial direction of the core, such that particles, optionally nanoparticles, of the material are produced.

15. The method of claim 14, further comprising modifying an atmosphere within the core.
